# EUROPEAN PATENT SPECIFICATION

(11) **EP 4 450 213 B1**
(45) Date of publication and mention of the grant of the patent: **17.09.2025**
(21) Application number: 23186190.7
(22) Date of filing: 18.07.2023
(51) Int. Cl.: B23K 31/12, B23K 26/03, B23K 26/21, B23K 31/00, G06T 7/00

(54) **SYSTEM AND METHOD FOR CHECKING QUALITY OF LASER WELDING**
SYSTEM UND VERFAHREN ZUR PRÜFUNG DER QUALITÄT VON LASERSCHWEISSEN
SYSTÈME ET PROCÉDÉ DE VÉRIFICATION DE LA QUALITÉ DE SOUDAGE AU LASER

(30) Priority: 20.04.2023 KR 20230051938
(43) Date of publication of application: 23.10.2024
(73) Proprietor: Hyundai Mobis Co., Ltd., Gangnam-gu Seoul 06141 (KR)
(72) Inventor: WOO, Sung Hun, 02843 Seoul (KR)
(74) Representative: Frenkel, Matthias Alexander

(56) References cited:
- CN-A- 109 886 298
- CN-A- 110 969 611
- CN-A- 111 069 819
- CN-A- 112 733 884
- CN-A- 113 516 651
- CN-A- 113 592 813
- CN-A- 113 887 593
- CN-A- 115 647 687
- CN-B- 113 780 900
- JP-A- 2019 195 850
- KR-A- 20190 088 089
- US-A1- 2020 406 392
- US-A1- 2023 087 105

## Description

### TECHNICAL FIELD

The following disclosure relates to a system and method for checking quality of laser welding, and more particularly, to a system and method for checking quality of laser welding that may use a machine learning-based network to perform learning processing on radiation plasma data generated during a laser welding process, and provide consistent quality inspection results in consideration of welding process environment trends reflected in the radiation plasma data and a welding process pattern determined to be normal.

### BACKGROUND

In general, detection technologies for each welding defect type (pore, non-welding, weak welding, etc.) have been performed through methods such as external inspection through vision inspection, non-destructive inspection through X-ray inspection, and visual inspection of workers.

However, the appearance inspection is a method of inspecting a change in appearance through an image, and may not inspect a fused state of an actual surface portion of a base material, and the non-destructive inspection is inconvenient to consider a special environment in which radiation is not necessarily exposed to workers.

In addition, since the visual inspection depends on workers, there is inevitably a problem of low detection reliability.

Accordingly, in order to solve the problems of the existing inspection method, technologies for determining welding defects by analyzing plasma generated during welding have been actively introduced in recent years.

In detail, by considering the fact that processing waves are emitted from a welded portion during laser welding, when the welding quality is good, the radiated processing wave (plasma) is converted into an optical signal (near infrared, near ultraviolet), which is then set as a reference waveform when the welding quality is good, upper and lower limit values are determined based on the set reference waveform, a good range (normal range) is set, and when the radiation plasma data is out of a good range, it is determined as defective.

However, as a result of applying to the actual mass production process, there is a problem of continuously monitoring and correcting the good range (quality determination standard) by the upper and lower limit values, and since the plasma sensing value is very sensitive, there is a problem in that the sensing value varies depending on a welded position (bead) even for the same molten metal.

In addition, when the process environment changes, there is a characteristic that the sensing value range rapidly fluctuates, and thus it is inconvenient for the workers to newly set quality determination standard whenever an event occurs.

For example, when there are 52 welded portions per product and when there are a total of nine production lines, since there are a need to monitor the quality control standard for 468 (52*9) welded portions, there is a situation where a lot of man-hours are required to maintain the quality inspection system.

In addition, in terms of mass production quality, when the quality determination standard is set through the upper limit value and the lower limit value based on the normal welding, there is a problem in that the defect detection ability is lowered.

In general, in the mass production sites, minute defects (small pores, etc.) that do not have a fatal effect on product functions are regarded as normally welded. These minute defects are sporadically generated over the entire welding section, and inevitably appear as abnormal waveforms on the plasma sensing value.

Accordingly, it is necessary to present the quality determination criterion by differently recognizing abnormal waveforms (abnormal waveforms caused by minute defects) generated in normal products and abnormal waveforms (abnormal waveforms caused by actual defects) generated in defective products, but when the sensing value exceeds the reference waveform by how much, there is a problem in that it is not possible to provide a consistent criterion for actual welding defects (abnormal waveform caused by actual defect).

Korean Patent Publication No. 10-1837018 ("Quality Inspection Apparatus of Laser-Welding, and Method Thereof") discloses a technology capable of checking the quality of welding by checking a bead depth between laser welding using a confocal type sensor.

CN 113 780 900 B discloses a method for detecting welding based on edge computing, the system includes at least one edge server, each edge server configured to obtain welding information of at least one welding machine, preprocess the welding information to generate processed data (by, for example, average filtering, median filtering, and Gaussian smoothing), input the processed data to a trained algorithm to generate a detecting result, and determine a welding quality of the welding machine according to the detecting result.

CN 115 647 687 A discloses a method of detecting welding abnormality, including S1 collecting high-frequency current data in a normal welding process, performing preprocessing, and dividing training set samples and verification set samples; and S2 building a welding abnormality recognition model.

### SUMMARY

An embodiment of the present disclosure is directed to providing a system and method for checking quality of laser welding capable of performing learning processing on radiation plasma data generated during a laser welding process by using a machine learning-based network and providing consistent quality inspection results in consideration of welding process environment trends reflected in the radiation plasma data and a welding process pattern determined to be normal. According to the present invention, a system and a method for checking quality of laser welding are provided in the independent claims. Preferred embodiments are set forth in the dependent claims.

In one general aspect, a system for checking quality of laser welding includes a data input unit configured to receive new radiation data generated during a laser welding process, an input data preprocessing unit configured to preprocess the new radiation data received by the data input unit, and a quality determination unit configured to: input the new radiation data preprocessed by the input data preprocessing unit to a training model that has been learned and stored in advance, receive an anomaly score, compare the anomaly score output based on a welding location of the corresponding new radiation data based on preset anomaly conditions for each welding location, and determine whether the laser welding process in which the corresponding new radiation data is generated is normal or defective.

The system further includes, to store the training model in advance, a data collection unit configured to collect radiation data generated during the laser welding process received in advance, a collected data preprocessing unit configured to perform the preprocessing on the radiation data collected by the data collection unit, and a learning processing unit configured to perform learning processing by inputting the radiation data preprocessed by the collected data preprocessing unit to a pre-stored machine learning network, in which, in the quality determination unit, the training model by the learning processing unit may be stored.

The system may further include, to set outlier conditions for each welding location in advance, a defect extraction unit configured to extract defective radiation data, which is radiation data by a welding process determined to be defective, from among the radiation data by the data collection unit, a defective anomaly derivation unit configured to: analyze the defective radiation data extracted by the defect extraction unit, classify the defective radiation data for each welding location information based on welding location information included in each defective radiation data, input the defective radiation data for each welding location information to the training model by the learning processing unit, and derive the anomaly scores for each welding location information, and a threshold setting unit configured to use the anomaly scores for each welding location information derived by the defective anomaly derivation unit to set a threshold condition for determining whether the laser welding process is normal or defective.

The collected data preprocessing unit includes a normal extraction unit configured to extract normal radiation data, which is radiation data by a welding process determined to be normal, from among the radiation data by the data collection unit, a clustering unit configured to perform clustering of the normal radiation data by the normal extraction unit using a pre-stored algorithm, a cluster optimization unit configured to evaluate clustering by the clustering unit using the pre-stored algorithm and select the most optimal number of clusters, a centroid setting unit configured to classify the normal radiation data extracted by the normal extraction unit based on the most optimal number of clusters selected by the cluster optimization unit and set centroids of each cluster, and a learning normalization unit configured to analyze the normal radiation data included in each cluster and delete the normal radiation data corresponding to the centroid to perform data normalization.

The threshold setting unit may include an anomaly determination unit configured to determine whether the anomaly score derived by the defective anomaly derivation unit satisfies a preset over-detection rate setting condition, a threshold determination unit configured to, based on the determination result of the anomaly determination unit and when the anomaly score derived by the defective anomaly derivation unit satisfies the preset over-detection rate setting condition, determine whether a predetermined condition is satisfied based on preset thresholds for each welding location information, and a threshold update unit configured to, based on a determination result of the threshold determination unit and when the predetermined condition is satisfied, update threshold setting to the corresponding anomaly score, and may perform an operation on all the defective radiation data extracted by the defect extraction unit.

The quality determination unit may be configured to compare the anomaly score, which is an analysis result, based on the threshold setting updated by the threshold determination unit or an initial threshold, and determine that a defect has occurred in the corresponding laser welding process when the anomaly score exceeds a reference.

The input data preprocessing unit may include a similarity processing unit configured to calculate a vector similarity between the centroids of each cluster set by the centroid setting unit and the new radiation data, and search for a centroid having a highest similarity, a case addition unit configured to add new radiation data corresponding to a cluster having the centroid having the highest similarity by the similarity processing unit, a centroid resetting unit configured to reset and update the centroid of the cluster to which the new radiation data is added by the case addition unit, and an input normalization unit configured to analyze the radiation data included in each cluster and delete data corresponding to the centroid to perform the normalization of the new radiation data.

When a number of radiation data included in the cluster having the centroid having the highest similarity by the similarity processing unit exceeds a preset maximum value, the case addition unit may be configured to delete first received radiation data and adds the corresponding new radiation data.

In another general aspect, a method of checking quality of laser welding using a system for checking quality of laser welding in which each step is performed by arithmetic processing means includes, in an inference process, a data inputting step including receiving, by a data input unit, new radiation data generated during a laser welding process, an input data preprocessing step including preprocessing, by an input data preprocessing unit, the new radiation data received by the data input unit, and a quality determining step including inputting, by a quality determination unit, the new radiation data preprocessed by the input data preprocessing unit to a training model that has been learned and stored in advance, receiving an anomaly score, comparing the anomaly score output based on a welding location of the corresponding new radiation data based on preset anomaly conditions for each welding location, and determining whether the laser welding process in which the corresponding new radiation data is generated is normal or defective.

The method further includes a learning process to store the training model in advance including, a data collecting step including collecting, by a data collection unit, radiation data generated during the laser welding process received in advance, a collected data preprocessing step including performing, by a collected data preprocessing unit, preprocessing the radiation data collected by the data collection unit, and a learning processing step including performing, by a learning processing unit, learning processing by inputting the radiation data preprocessed by the collected data preprocessing unit to a pre-stored machine learning network may be further performed,

To set the anomaly conditions for each welding location in advance, in the learning process, a defect extracting step including extracting, by a defect extraction unit, defective radiation data, which is radiation data by a welding process determined to be defective, from among the radiation data by the data collection unit, a defective anomaly deriving step including analyzing, by a defective anomaly derivation unit, the defective radiation data extracted by the defect extraction unit, classifying the defective radiation data for each welding location information based on welding location information included in each defective radiation data, inputting the defective radiation data for each welding location information to the training model in the learning processing step, and deriving the anomaly scores for each welding location information, and an anomaly determining step including determining, by an anomaly determination unit, whether the anomaly score derived by the defective anomaly derivation unit satisfies a preset over-detection rate setting condition, based on the determination result of the anomaly determining step, and in response to the anomaly score derived by the defective anomaly derivation unit satisfying the preset over-detection rate setting condition, a threshold determining step including determining, by a threshold determination unit, whether a predetermined condition is satisfied based on preset thresholds for each welding location information threshold, and based on a determination result of the threshold determining step, and in response to the predetermined condition being satisfied, a threshold updating step including updating, by a threshold update unit, threshold setting to the corresponding anomaly score may be further performed.

The quality determining step may include comparing, by the quality determination unit, the anomaly score, which is an analysis result, based on the threshold setting updated by the threshold update unit or an initial threshold, and determining that a defect has occurred in the corresponding laser welding process in response to the anomaly score exceeding a reference.

The collected data preprocessing step includes a normal extracting step including extracting, by a normal extraction unit, normal radiation data, which is radiation data by a welding process determined to be normal, from among the radiation data by the data collection unit, a clustering step including performing, by a clustering unit, clustering of the normal radiation data by the normal extraction unit using a pre-stored algorithm, a cluster optimization step including evaluating, by a cluster optimization unit, the clustering by the clustering unit using the pre-stored algorithm and selecting the most optimal number of clusters, a centroid setting step including classifying, by a centroid setting unit, the normal radiation data extracted by the normal extraction unit based on the most optimal number of clusters selected by the cluster optimization unit, and setting a centroid of each cluster, and a learning normalization step including analyzing, by a learning normalization unit, the normal radiation data included in each cluster and deleting the normal radiation data corresponding to the centroid to perform data normalization.

The input data preprocessing step may include a similarity processing step including calculating, by a similarity processing unit, a vector similarity between the centroids of each cluster set by the centroid setting unit and the new radiation data, and searching for a centroid having a highest similarity, a case adding step including adding, by a case addition unit, new radiation data corresponding to a cluster having a centroid having the highest similarity by the similarity processing unit, a centroid resetting unit of resetting and updating, both by a centroid resetting unit, the centroid of the cluster to which the new radiation data is added by the case addition unit, and an input normalization step including analyzing, by an input normalization unit, the radiation data included in each cluster and deleting data corresponding to the centroid to perform the normalization of the new radiation data.

In response to the number of radiation data included in the cluster having the centroid having the highest similarity by the similarity processing unit exceeding a preset maximum value, the case adding step may include deleting, by the case addition unit, first received radiation data and adding the corresponding new radiation data.

### BRIEF DESCRIPTION OF THE DRAWINGS

FIG. 1 is an exemplary configuration diagram illustrating a system for checking quality of laser welding according to an embodiment of the present disclosure.
FIG. 2 is an exemplary flowchart illustrating a method of checking quality of laser welding according to an embodiment of the present disclosure.

### DETAILED DESCRIPTION OF EMBODIMENTS

The above-described objects, features, and advantages of the present disclosure will become more obvious from the following detailed description provided in relation to the accompanying drawings. The following specific structural or functional descriptions are only exemplified for the purpose of explaining the embodiments according to the concept of the present disclosure, and the embodiments according to the concept of the present disclosure may be implemented in various forms and should not be construed as limited to the embodiments described herein or in the application. Since embodiments according to the concept of the present disclosure may be variously modified and may have several forms, specific embodiments will be illustrated in the accompanying drawings and will be described in detail in the present specification or application. However, it is to be understood that the present invention is not limited to specific embodiments, but defined by the appended claims. Terms such as first, second, or the like, may be used to describe various components, but these components are not to be construed as being limited to these terms. The terms are used only to distinguish one component from another component. For example, a first component may be named a second component and the second component may also be named the first component, without departing from the scope of the present disclosure. It is to be understood that when one component is referred to as being connected to or coupled to another component, it may be connected directly to or coupled directly to another component or be connected to or coupled to another component with the other component interposed therebetween. On the other hand, it is to be understood that when one component is referred to as being connected directly to or coupled directly to another component, it may be connected to or coupled to another component without the other component interposed therebetween. Other expressions describing a relationship between components, that is, "between," "~directly between," "~neighboring to," "~directly neighboring to," and the like, should be similarly interpreted. Terms used in the present specification are used only in order to describe specific embodiments rather than limiting the present disclosure. Singular forms are intended to include plural forms unless the context clearly indicates otherwise. It is to be understood that terms "include,""have," or the like, used in the present specification specify the presence of features, numerals, steps, operations, components, parts, or a combination thereof described in the present specification, but do not preclude the presence or addition of one or more other features, numerals, steps, operations, components, parts, or a combination thereof. Unless indicated otherwise, it is to be understood that all the terms used in the specification including technical and scientific terms have the same meaning as those that are generally understood by those who skilled in the art. Terms generally used and defined in a dictionary are to be interpreted as the same meanings with meanings within the context of the related art, and are not to be interpreted as ideal or excessively formal meanings unless clearly indicated in the present specification. Hereinafter, embodiments of the present disclosure will be described in detail with reference to the accompanying drawings. Like reference numerals proposed in each drawing denote like components.

In addition, a system means a set of components including devices, mechanisms, means, and the like, systematized in order to perform required functions and regularly interacting with one another.

A system and method for checking quality of laser welding according to an embodiment of the present disclosure is largely divided into a learning process and an inference process.

The learning process is a process for generating a training model (baseline model) that may determine whether the laser welding quality is normal or defective, and uses welding plasma data collected in advance.

The inference process is a process for determining normal/defect for newly input welding plasma data using the generated training model.

In this case, in the present disclosure, by continuously performing the learning process using the welding plasma data determined to be normal in the inference process, the training model is updated, resulting in quality inspection results having increasingly higher accuracy and reliability.

In view of this point, a system and method for checking quality of laser welding according to an embodiment of the present disclosure will be described in detail.

The system and method for checking quality of laser welding of the present disclosure may apply a consistent defect determination criterion for laser welding quality by applying an anomaly score that is inferred based on machine learning. That is, the anomaly score is assigned to determine the degree of deviation of the input data (new data) compared to a normal data distribution trained by the training model, and when the anomaly score is greater than a threshold of past defective products, the product according to the corresponding welding process is determined to be defective.

Compared to variables (upper limit and lower limit height, invasion frequency, invasion area, etc., based on a reference sensing value) that have been applied as conventional defect determination criteria, comparison variables may be reduced to one dimension called an anomaly score, so there is the advantage that a worker does not have to continuously adjust the quality determination criterion.

In addition, by extracting and deleting process environment trends during a data preprocessing process, it is possible to minimize the influence on the process environment trend.

It is possible to not only delete the process environment trends, but also continuously monitor the deleted process environment trends and use the process environment trends to improve the process environment.

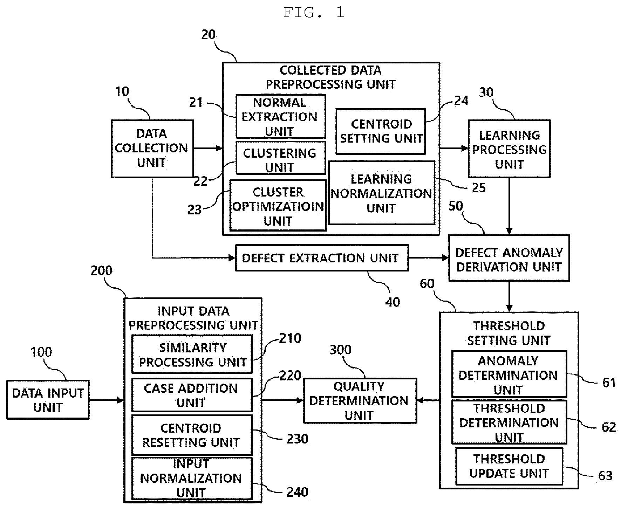

FIG. 1 illustrates a configuration diagram illustrating a system for checking quality of laser welding according to an embodiment of the present disclosure.

As illustrated in FIG. 1, the system for checking quality of laser welding according to an embodiment of the present disclosure includes a data collection unit 10, a collected data preprocessing unit 20, a learning processing unit 30, a defect extraction unit 40, a defective anomaly derivation unit 50, and a threshold setting unit 60 that perform an operation in a learning process, and a data input unit 100, an input data preprocessing unit 200, and quality determination unit 300 that perform an operation in an inference process.

As described above, since the results of the inference process are continuously and successively reflected in the learning process, it is preferable that each component performs an operation through arithmetic processing means including a computer.

Although there is a difference in drawing numbers between the configuration that performs operations in the learning process and the configuration that performs operations in the inference process, this is only a description for smooth explanation, and considering this, the arithmetic processing means do not necessarily have to be separated.

Each component will be described in detail.

The data collection unit 10 collects radiation data generated during the laser welding process that has been received in advance, that is, collected in advance.

Here, the radiation data means a plasma sensing value, and the acquisition process is generated by converting a process wave (plasma) radiated from a welded portion in a welding process into an optical signal (near infrared ray, near ultraviolet ray).

The collected data preprocessing unit 20 performs preprocessing on radiation data collected by the data collection unit 10.

The collected data preprocessing unit 20 removes a process environment trend in units of milliseconds (ms) and performs time-series data processing capable of preserving only the amount of change (noise) of the optical signal (radiation data). When a quality determination criterion is set through the upper and lower limit values based on normal welding in terms of mass production quality, which is a problem in the related art, the operation of the collected data pre-processing unit 20 is to solve the problem that even abnormal waveforms (abnormal waveforms due to minute defects) generated in a number of normal products have a pattern that exceeds the quality criterion and are determined to be defective.

To this end, as illustrated in FIG. 1, the collected data preprocessing unit 20 includes a normal extraction unit 21, a clustering unit 22, a cluster optimization unit 23, a centroid setting unit 24, and a learning normalization unit 25.

The normal extraction unit 21 extracts normal radiation data, which is radiation data by a welding process determined to be normal, from among the radiation data by the data collection unit. That is, only data in which welding has been normally performed among all data is extracted.

Since the data collection unit 10 is radiation data collected in advance, welding normal or welding defect information, which is a result of an existing welding process, is naturally labeled.

The normal extraction unit 21 considers this and extracts only normal radiation data.

The clustering unit 22 performs clustering of the normal radiation data by the normal extraction unit 21 using a pre-stored algorithm.

In detail, the clustering unit 22 performs the clustering of the normal radiation data by the normal extraction unit 21, that is, waveform clustering, using a K-means algorithm. By removing the process environment trend, the height of the waveform that varies by welding location (bead) and period may be corrected to zero.

In this way, it is possible to classify normal mass-produced quality standard products according to characteristics, so noise occurring in common, that is, noise caused by the process environment trend, may be removed.

To briefly explain the K-means algorithm, assuming that any data set exists and is classified into k clusters, there are k centroids in the data set. Each data is assigned to a nearby centroid based on a Euclidean distance, and a group of data gathered at the same centroid becomes one cluster.

Considering this, the clustering unit 22 performs the clustering of the normal radiation data by the normal extraction unit 21 while varying k from 2 to 10.

The cluster optimization unit 23 evaluates clustering by the clustering unit 22 using a pre-stored algorithm and selects the most optimal number of clusters.

In detail, the cluster optimization unit 23 evaluates clustering by the clustering unit 22 based on a silhouette coefficient, which is a cluster evaluation index, and selects the final k, which is the most optimal number of clusters.

In this case, the silhouette coefficient is obtained by calculating a distance between each data point and surrounding data points, and is used as a criterion for evaluating clustering whether the data in the cluster are well gathered and whether the clusters are well distinguished from each other.

The centroid setting unit 24 classifies the normal radiation data extracted by the normal extraction unit 21 based on the most optimal number of clusters selected by the cluster optimization unit 23.

In this way, each centroid is set for each cluster. That is, k centroids are set.

The learning normalization unit 25 analyzes the normal radiation data included in each cluster and deletes the normal radiation data corresponding to the centroid to perform data normalization.

That is, when the normal radiation data extracted by the normal extraction unit 21 is classified based on the most optimal number of clusters selected by the cluster optimization unit 23, each normal radiation data is classified by being assigned to a close centroid based on the Euclidean distance.

In other words, the normal radiation data is grouped by characteristics (by welding location (bead), by period, etc.) of the laser welding process.

In consideration of this, the learning normalization unit 25 performs data normalization by setting commonly generated noise for each group as the process environment trend and removing the noise.

The operation of the collected data preprocessing unit 20 considers the characteristics of the plasma sensing value that changes on a daily basis, performs the operation on a daily basis, and performs operations on all days collected by the data collection unit 10.

The learning processing unit 30 performs learning processing by inputting the radiation data preprocessed by the collected data preprocessing unit 20 to a pre-stored machine learning network.

In detail, the learning processing unit 30 generates training data by merging operation performance results on a daily basis through the collected data preprocessing unit 20.

The learning processing is performed by inputting the generated training data to the pre-stored machine learning network.

As the pre-stored machine learning network, a one-dimensional convolutional neural network (1D-CNN) algorithm is used, but this is only one embodiment of the present disclosure, and is not necessarily limited thereto.

However, as the pre-stored machine learning network in the learning processing unit 30, the learning processing is performed to extract characteristics of each welding section using the 1D-CNN algorithm.

For the configuration of the 1D-CNN algorithm, for example, an encoder including three layers, a decoder including three layers, and ReLu as an activation function are configured, and a kernel size is set to be 30, a stride is set to be 2, and a mean squared error (MSE) is set as a loss function.

In the present disclosure, by using the training model, which is the learning result of the learning processing unit 30 and using the output anomaly score, it is determined whether the laser welding process is normal or defective. As described above, since a normal product may be determined to be defective depending on how to set the quality determination criterion based on the reference sensing value, it is preferable to consider the optimal setting of the threshold, which is the determination criterion.

To this end, the defect extraction unit 40 preferably extracts defective radiation data, which is radiation data by a welding process determined to be defective, from among the radiation data by the data collection unit 10. That is, only data in which welding has been performed due to defects among all data is extracted.

It is preferable that the defective anomaly derivation unit 50 analyzes the defective radiation data extracted by the defect extraction unit 40 and classifies the defective radiation data for each welding location information based on the welding location information included in each defective radiation data.

This can be performed through information labeled in the radiation data.

Thereafter, it is preferable to derive anomaly scores for each welding location information by inputting the defective radiation data for each welding location information to the training model by the learning processing unit 30.

The threshold setting unit 60 preferably uses the anomaly scores for each welding location information derived by the defective anomaly derivation unit 50 to set a threshold condition for determining whether the laser welding process is normal or defective.

To this end, as illustrated in FIG. 1, the threshold setting unit 60 includes an anomaly determination unit 61, a threshold determination unit 62, and a threshold update unit 63.

The anomaly determination unit 61 preferably determines whether the anomaly score derived by the defective anomaly derivation unit 50 corresponding to certain specific welding location information satisfies a preset over-detection rate setting condition.

In detail, the anomaly determination unit 61 preferably determines whether the anomaly score derived by the defective anomaly derivation unit 50 satisfies anomaly score having 1% of an over-detection rate (rate of determining normal as defective) which is a preset over-detection rate setting condition < anomaly score derived by the defective anomaly derivation unit 50 < 1 (initial threshold).

In this case, since "1" is an initial threshold, it is safe to say that there is no threshold.

As the determination result of the anomaly determination unit 61, when the anomaly score derived by the defective anomaly derivation unit 50 satisfies the preset over-detection rate setting condition, in other words, the anomaly score derived by the defective anomaly derivation unit 50 is less than the initial threshold while exceeding the anomaly score of 1% of the over-detection rate (rate of determining normal as defective), it is preferable that the threshold determination unit 62 additionally determines whether the anomaly score derived by the defective anomaly derivation unit 50 satisfies a predetermined condition based on the thresholds for each welding location information set.

That is, the threshold determination unit 62 determines whether the anomaly score derived by the defective anomaly derivation unit 50 is less than the thresholds for each welding location information which is the predetermined condition.

Here, the threshold sets for each welding location information are set differently according to the operation of the threshold update unit 63 to be described later.

That is, since the threshold is set to "1," which is the initial threshold, during the initial operation of the threshold determination unit 62, it is determined whether the anomaly score corresponding to certain specific welding location information derived by the defective anomaly derivation unit 50 is less than the initial threshold set in the corresponding welding location information.

Subsequently, as the determination result of the threshold determination unit 62, when anomaly score derived by the defective anomaly derivation unit 50 is less than the set threshold of the corresponding welding location information, it is preferable that the threshold update unit 63 updates the threshold setting of the corresponding welding location to the anomaly score derived by the defective anomaly derivation unit 50 which is the corresponding anomaly score.

That is, as the initial operation result of the threshold determination unit 62, when the anomaly score corresponding to certain specific welding location information derived by the defective anomaly derivation unit 50 is less than the initial threshold set in the corresponding welding location information, the threshold for the corresponding welding location information is updated to the anomaly score corresponding to certain specific welding location information derived by the defective anomaly derivation unit 50.

Since the threshold setting unit 60 is set to operate on all the defective radiation data extracted by the defect extraction unit 40, the thresholds set for each welding location information vary according to repeated execution.

Through the process of the threshold setting unit 60, it is possible to exclude a defective label close to a normal waveform (normal radiation data) from among the defective radiation data.

In addition, as a result of performing the operation on all the defective radiation data extracted by the defect extraction unit 40, when there is no satisfactory defective radiation data in the determination result of the anomaly determination unit 61 and the determination result of the threshold determination unit 62, the thresholds set for each welding location information correspond to the initial threshold.

As such, after the operations of the data collection unit 10, the collected data preprocessing unit 20, the learning processing unit 30, the defect extraction unit 40, the defective anomaly derivation unit 50, and the threshold setting unit 60 are completed, through the data input unit 100, the input data preprocessing unit 200, and the quality determination unit 300, it is determined whether the corresponding laser welding process is normal or defective using the radiation data generated in the actual laser welding process.

It is preferable that the data input unit 100 newly receives the radiation data generated in the laser welding process, that is, receives new radiation data.

The input data preprocessing unit 200 preferably performs preprocessing on new radiation data input by the data input unit 100.

Like the learning process, the inference process also removes noise caused by a process environment trend of new radiation data.

To this end, as illustrated in FIG. 1, it is preferable that the input data preprocessing unit 200 further includes a similarity processing unit 210, a case addition unit 220, a centroid resetting unit 230, and an input normalization unit 240.

The input data preprocessing unit 200 uses a real time moving average clustering algorithm to estimate the process environment trend for new training data in order to perform the same preprocessing operation as the training data.

However, when the clustering is performed every time new radiation data is input, calculation complexity increases, which may affect real-time defect determination, and all data should be stored, which may continue to increase memory usage.

Therefore, the input data preprocessing unit 200 may use a real-time moving average clustering algorithm to update only the centroid of the cluster to which the new input data belongs to reduce computational complexity, and remove the oldest data of the corresponding cluster to keep the memory size constant.

In detail, the similarity processing unit 210 preferably calculates a vector similarity between the centroids of each cluster set by the centroid setting unit 24 and searches for a centroid having a highest similarity. This calculates the vector similarity based on the Euclidean distance. The criterion for the vector similarity is set to ≤ 1.

The case addition unit 220 preferably adds new radiation data corresponding to a cluster having the centroid having the highest similarity by the similarity processing unit 210.

In this case, when the number of radiation data included in the cluster having the centroid having the highest similarity by the similarity processing unit 210 exceeds a preset maximum value, it is preferable that the case addition unit 220 deletes first received radiation data and adds the corresponding new radiation data.

Of course, when the number of radiation data included in the cluster having the highest centroid by the similarity processing unit 210 is less than the preset maximum value, it is preferable to add new radiation data without deleting the existing radiation data included in the corresponding cluster.

As described above, the centroid resetting unit 230 preferably resets and updates the centroid of the cluster to which new radiation data is added by the case addition unit 220 in order to update only the centroid of the cluster to which the new input data belongs.

The centroid of the cluster is naturally set using the Euclidean distance between the radiation data included in the cluster.

It is preferable that the input normalization unit 240 analyzes radiation data (normal radiation data classified by the centroid setting unit 24 + new radiation data by the data input unit 100) included in each cluster, deletes data corresponding to the centroid, and performs the normalization of new radiation data.

That is, the data normalization is performed by setting noise commonly occurring in a group including new radiation data as a process environment trend and removing the noise.

As the search result of the similarity processing unit 210, when the centroid that meets the new radiation data and criterion is not searched, it is preferable that the input data preprocessing unit 200 newly performs clustering on the new radiation data by using the K-means algorithm together with the normal radiation data extracted by the normal extraction unit 21.

As the search result of the similarity processing unit 210, when the centroid that meets the new radiation data and criterion is not searched, it is predicted that the process environment changes greatly, and assuming that vector similarity > 1, it is preferable to newly perform the clustering using the K-means algorithm.

Thereafter, the centroid is set for each new cluster, the data corresponding to the centroid is deleted, and data included in each cluster is normalized.

The quality determination unit 300 performs the preprocessing by the input data preprocessing unit 200 on the training model by the learning processing unit 30. In other words, the quality determination unit 300 inputs normalized new radiation data to receive an anomaly score, which is an analysis result of the corresponding new radiation data.

In this case, the normalized new radiation data means that the data corresponding to the centroid is deleted in consideration of the included cluster.

It is preferable that the quality determination unit 300 compares the anomaly score, which is the analysis result, based on the threshold condition set by the threshold setting unit 60 to determine whether the corresponding laser welding process is normal or defective. In this case, the comparison process of the anomaly score is compared with the anomaly condition set based on the welding location of the new radiation data, and it is determined whether the laser welding process in which the corresponding new radiation data is generated is normal or defective.

In other words, it is preferable that the quality determination unit 300 compares the anomaly score, which is the analysis result of the corresponding new radiation data, based on the threshold setting updated by the threshold update unit 63 or the initial threshold based on the welding location of the new radiation data, and when the anomaly score exceeds the reference, determines that a defect has occurred in the laser welding process that generates the corresponding new radiation data.

In addition, as the determination result of the quality determination unit 300, when the laser welding process that generates the corresponding new radiation data is determined to be normal, the system for checking quality of laser welding according to an embodiment of the present disclosure preferably updates the training model by adding the corresponding new radiation data to the training data set.

Of course, the process preferably performs additional learning by utilizing factory downtime when the laser welding process is not in progress.

That is, the operation of the clustering unit 22 is repeatedly performed using the corresponding new radiation data.

In addition, as the determination result of the quality determination unit 300, when the laser welding process that generates the corresponding new radiation data is determined to be defective, it is preferable to repeatedly perform threshold optimization using the corresponding new radiation data.

That is, the operation of the defective anomaly derivation unit 50 is repeatedly performed using the corresponding new radiation data.

In this case, in consideration of the performance of the arithmetic processing means available in the mass production application process, the time available for learning, the amount of available memory, etc., the operation is repeatedly performed while deleting the past radiation data. As for the deletion condition, it is preferable to delete the radiation data that is input most recently.

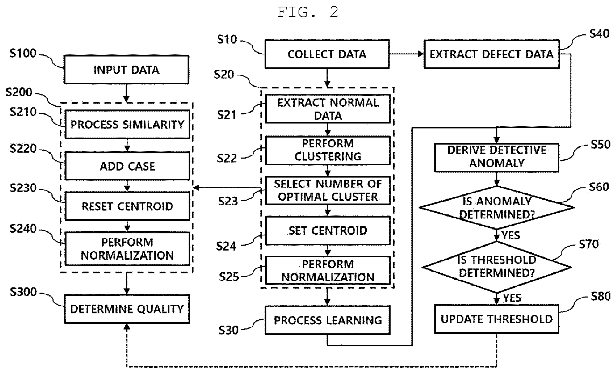

FIG. 2 illustrates a flowchart of a method of checking quality of laser welding according to an embodiment of the present disclosure.

As illustrated in FIG. 2, the method of checking quality of laser welding according to an embodiment of the present disclosure includes a data collecting step S10 corresponding to the learning process, a collected data preprocessing step S20, a learning processing step S30, a defect extracting step S40, a defective anomaly deriving step S50, an anomaly determining step S60, a threshold determining step S70, a threshold updating step S80, a data inputting step S100 corresponding to the inference process, an input data preprocessing step S200, and a quality determining step S300.

Each step preferably uses the system for checking quality of laser welding performed by the arithmetic processing means.

In the method of checking quality of laser welding according to an embodiment of the present disclosure, the results of the inference process are continuously and successively reflected in the learning process, which will be described later in detail.

Each step will be described in detail.

In the data collecting step S10, the data collection unit 10 collects the radiation data generated in the laser welding process that has been received in advance, that is, collected in advance.

Here, the radiation data means a plasma sensing value, and the acquisition process is generated by converting a process wave (plasma) radiated from a welded portion in a welding process into an optical signal (near infrared ray, near ultraviolet ray). In addition, welding normality, welding defect information, welding location information, etc., which are results of the welding process for each radiation data, are labeled.

In the collected data preprocessing step S20, the collected data preprocessing unit 20 performs the preprocessing on the radiation data collected by the data collecting step S10.

In the collected data preprocessing step S20, the process environment trend is removed in units of milliseconds (ms) and time-series data processing capable of preserving only the amount of change (noise) of the optical signal (radiation data) is performed. When a quality determination criterion is set through the upper and lower limit values based on normal welding in terms of mass production quality, which is a problem in the related art, the operation of the collected data preprocessing step S20 is to solve the problem that even abnormal waveforms (abnormal waveforms due to minute defect) occurring in a number of normal products has a pattern that exceeds the quality determination criterion and are determined to be defective.

As illustrated in FIG. 2, the collected data preprocessing step S20 includes a normal extracting step S21, a clustering step S22, a cluster optimization step S23, a centroid setting step S24, and a learning normalization step S25.

In the collected data preprocessing step S20, the operation is performed on a daily basis in consideration of the characteristics of the plasma sensing values that change on a daily basis, and the operations are performed for all days collected by the data collecting step S10.

In the normal extracting step S21, the normal radiation data, which is the radiation data by the welding process determined to be normal, is extracted from among the radiation data by the data collecting step S10. That is, only data in which welding has been normally performed among all data is extracted.

In the clustering step S22, the clustering of the normal radiation data by the normal extracting step S21 is preferably performed using the pre-stored algorithm.

Using the K-means algorithm as the pre-stored algorithm, the clustering of the normal radiation data, that is, the waveform clustering by the normal extracting step S21 is performed. By removing the process environment trend, the height of the waveform that varies by welding location (bead) and period may be corrected to zero.

In this way, it is possible to classify normal mass-produced quality standard products according to characteristics, so noise occurring in common, that is, noise caused by the process environment trend, may be removed.

To briefly explain the K-means algorithm, assuming that any data set exists and is classified into k clusters, there are k centroids in the data set. Each data is assigned to a nearby centroid based on a Euclidean distance, and a group of data gathered at the same centroid becomes one cluster.

Considering this, in the clustering step S22, the clustering of the normal radiation data by the normal extracting step S21 is performed while k varies from 2 to 10.

In the cluster optimization step S23, the clustering by the clustering step S22 is evaluated using the pre-stored algorithm and the most optimal number of clusters is selected.

As the pre-stored algorithm, a silhouette coefficient, which is a cluster evaluation index, is used. Based on the silhouette coefficient, the clustering is evaluated in the clustering step S22, and the final k, which is the most optimal number of clusters, is selected.

In this case, the silhouette coefficient is obtained by calculating a distance between each data point and surrounding data points, and is used as a criterion for evaluating clustering whether the data in the cluster are well gathered and whether the clusters are well distinguished from each other.

The centroid setting step S24 classifies the normal radiation data extracted by the normal extracting step S21 based on the most optimal number of clusters selected by the cluster optimization step S23. In this way, each centroid is set for each cluster. That is, k centroids are set.

In the learning normalization step S25, the normal radiation data included in each cluster is analyzed and the normal radiation data corresponding to the centroid is deleted, thereby performing the data normalization.

That is, when the normal radiation data extracted by the normal extracting step S21 is classified based on the most optimal number of clusters selected by the cluster optimization step S23, each normal radiation data is classified by being assigned to a close centroid based on the Euclidean distance.

In other words, the normal radiation data is grouped by characteristics (by welding location (bead), by period, etc.) of the laser welding process.

In consideration of this, in the learning normalization step S25, the commonly generated noise for each group is set as the process environment trend and the noise is removed, thereby performing the data normalization.

In the learning processing step S30, the learning processing unit 30 inputs the radiation data preprocessed by the collected data preprocessing step S20 to the pre-stored machine learning network to perform the learning processing.

In detail, in the learning processing step S30, the operation performance results on a daily basis by the collected data preprocessing step S20 are merged and generated as the training data. The learning processing is performed by inputting the generated training data to the pre-stored machine learning network.

As the pre-stored machine learning network, a 1D-CNN algorithm is used, but this is only one embodiment of the present disclosure, and is not necessarily limited thereto.

In the learning processing step S30, the learning processing is performed to extract characteristics of each welding section using the pre-stored machine learning network.

For the configuration of the 1D-CNN algorithm, for example, an encoder including three layers, a decoder including three layers, and ReLu as an activation function are configured, and a kernel size is set to be 30, a stride is set to be 2, and a mean squared error (MSE) is set as a loss function.

Most ideally, by using the training model, which is the learning result of the learning processing step S30 and using the output anomaly score, it is to determine whether the laser welding process is normal or defective. However, as described above, since a normal product may be determined to be defective depending on how to set the quality determination criterion based on the reference sensing value, it is preferable to consider the optimal setting of the threshold, which is the determination criterion.

To this end, in the defect extracting step S40, the defect extraction unit 40 extracts the defective radiation data, which is the radiation data by the welding process determined to be defective, from among the radiation data in the data collecting step S10. That is, only data in which welding has been performed due to defects among all data is extracted.

In the defective anomaly deriving step S50, the defective anomaly derivation unit 50 analyzes the defective radiation data extracted by the defect extracting step S40, classifies the defective radiation data for each welding location information based on welding location information included in each defective radiation data, inputs the defective radiation data for each welding location information to the training model by the learning processing step S30, and derives the anomaly scores for each welding location information.

In other words, in the defective anomaly deriving step S50, the extracted defective radiation data is analyzed, and each welding location information based on the welding location information included in each defective radiation data is classified, which is performed through information labeled in the radiation data.

Thereafter, the defective radiation data for each welding location information is input to the training model, and an anomaly score for each welding location information is derived.

In the anomaly determining step S60, the anomaly determination unit 61 determines whether the anomaly score derived by the defective anomaly deriving step S50 satisfies a preset over-detection rate setting condition.

In this case, the meaning of the anomaly score derived by the defective anomaly deriving step S50 is an anomaly score derived by defective radiation data corresponding to certain specific welding location information.

In the anomaly determining step S60, it is determined whether the anomaly score derived by the defective anomaly deriving step S50 satisfies anomaly score having 1% of an over-detection rate (rate of determining normal as defective) which is a preset over-detection rate setting condition < anomaly score derived by the defective anomaly derivation unit 50 < 1 (initial threshold).

In this case, since "1" is an initial threshold, it is safe to say that there is no threshold.

In the threshold determining step S70, as the determination result of the anomaly determining step S60, when the anomaly score derived by the defective anomaly deriving step S50 satisfies the preset over-detection rate setting condition, in other words, the anomaly score derived by the defective anomaly deriving step S50 is less than the initial threshold while exceeding the anomaly score of 1% of the over-detection rate (rate of determining normal as defective), the threshold determination unit 62 additionally determines whether the anomaly score derived by the defective anomaly deriving step S50 satisfies a predetermined condition based on the thresholds for each welding location information set.

That is, in the threshold determining step S70, it is determined whether the anomaly score derived by the defective anomaly deriving step S50 is less than the thresholds for each welding location information which is the predetermined condition.

Here, the thresholds set for each welding location information are naturally set as the initial threshold when the first operation is performed, but may be set differently as the defective anomaly deriving step S50, the anomaly determining step S60, the threshold determining step S70, and the threshold updating step S80 to be described later are performed using the defective radiation data extracted by the defect extracting step S40.

In other words, since the threshold is set to "1," which is the initial threshold, during the initial operation of the threshold determining step S70, it is determined whether the anomaly score corresponding to certain specific welding location information derived by the defective anomaly deriving step S50 is less than the initial threshold set in the corresponding welding location information.

In the threshold updating step S80, as the determination result of the threshold determining step S70, when the anomaly score derived by the defective anomaly deriving step S50 is less than the set threshold of the corresponding welding location information, the threshold update unit 63 updates the threshold setting of the corresponding welding location to the anomaly score derived by the defective anomaly deriving step S50 which is the corresponding anomaly score.

That is, as the initial operation result of the threshold determining step S70, when the anomaly score corresponding to certain specific welding location information derived by the defective anomaly deriving step S50 is less than the initial threshold set in the corresponding welding location information, the threshold for the corresponding welding location information is updated to the anomaly score corresponding to certain specific welding location information derived by the defective anomaly deriving step S50.

Since the defective anomaly deriving step S50, the anomaly determining step S60, the threshold determining step S70, and the threshold updating step S80 are set to perform operations on all defective radiation data extracted by the defect extracting step S40, the threshold set for each welding location information varies according to repeated execution.

As the above-described defective anomaly deriving step S50, anomaly determining step S60, threshold determining step S70, and threshold updating step S80 are performed, defective labels close to normal waveforms (normal radiation data) may be excluded from among the defective radiation data.

In addition, as a result of performing the operation on all the defective radiation data, when there is no defective radiation data that satisfies the anomaly determining step S60 and the threshold determining step S70, the thresholds set for each welding location information correspond to the initial threshold.

In this way, after performing the defective anomaly deriving step S50, the anomaly determining step S60, the threshold determining step S70, and the threshold updating step S80 on all the defective radiation data extracted by the defect extracting step S40, it is determined whether the corresponding laser welding process is normal or defective by using the radiation data generated in the actual laser welding process.

In the data inputting step S100, the data input unit 100 newly receives the radiation data generated in the laser welding process, that is, receives new radiation data.

In the input data preprocessing step S200, the input data preprocessing unit 200 performs the preprocessing on the new radiation data received by the data inputting step S100.

Like the learning process, the inference process also removes noise caused by a process environment trend of new radiation data.

To this end, in the input data preprocessing step S200, a real time moving average clustering algorithm is used to estimate the process environment trend for new training data in order to perform the same preprocessing operation as the training data.

However, when the clustering is performed every time new radiation data is input, calculation complexity increases, which may affect real-time defect determination, and all data should be stored, which may continue to increase memory usage.

Therefore, in the input data preprocessing step S200, real-time moving average clustering algorithm may be used to update only the centroid of the cluster to which the new input data belongs to reduce computational complexity, and remove the oldest data of the corresponding cluster to keep the memory size constant.

As illustrated in FIG. 2, the input data preprocessing step S200 includes a similarity processing step S210, a case adding step S220, a centroid resetting step S230, and an input normalization step S240.

In the similarity processing step S210, the similarity processing unit 210 calculates the vector similarity between the centroids of each cluster set by the centroid setting step S24 and the new radiation data, and searches for the centroid having the highest similarity. This calculates the vector similarity based on the Euclidean distance. The criterion for the vector similarity is set to ≤ 1.

In the case adding step S220, the case addition unit 220 adds new radiation data corresponding to the cluster having the centroid having the highest similarity by the similarity processing step S210.

In this case, in the case adding step S220, when the number of radiation data included in the cluster having the centroid having the highest similarity by the similarity processing step S210 exceeds a preset maximum value, the first received radiation data is deleted and the corresponding new radiation data is added.

Alternatively, in the case adding step S220, when the number of radiation data included in the cluster having the highest centroid by the similarity processing step S210 is less than the preset maximum value, new radiation data may also be added without deleting the existing radiation data included in the corresponding cluster.

In the centroid resetting step S230, the centroid resetting unit 230 resets and updates the centroid of the cluster to which new radiation data is added by the case adding step S220 in order to update only the centroid of the cluster to which the new input data belongs.

The centroid of the cluster is naturally set using the Euclidean distance between the radiation data included in the cluster.

In the input normalization step S240, the input normalization unit 240 analyzes radiation data (normal radiation data classified by the centroid setting step S24 + new radiation data by the data inputting step S100) included in each cluster, deletes data corresponding to the centroid, and performs the normalization of new radiation data.

That is, the data normalization is performed by setting noise commonly occurring in a group including new radiation data as a process environment trend and removing the noise.

As the search result of the similarity processing step S210, when the centroid that meets the new radiation data and criterion is not searched, in the input data preprocessing step S200, the clustering is newly performed by using the K-means algorithm together with the normal radiation data extracted by the normal extracting step S21.

In this way, as the search result of the similarity processing step S210, when the centroid that meets the new radiation data and criterion is not searched, it is predicted that the process environment changes greatly, and assuming that vector similarity > 1, the clustering is newly performed using the K-means algorithm.

Thereafter, the centroid is set for each new cluster, the data corresponding to the centroid is deleted, and data included in each cluster is normalized.

In the quality determining step S300, the quality determination unit 300 inputs new radiation data preprocessed by the input data preprocessing step S200 to the training model by the learning processing step S30, and receives the analysis result of the corresponding new radiation data, and compares the analysis results based on the set threshold conditions to determine whether the laser welding process is normal or defective.

Here, the set threshold condition means the threshold setting updated by the threshold updating step S80 or the initial threshold.

In the quality determining step S300, the anomaly score, which is the analysis result of the corresponding new radiation data, is compared based on the set threshold condition, and when the anomaly score exceeds the reference, it is determined that the laser welding process that generates the corresponding new radiation data is defective. In this case, the comparison process of the anomaly score is compared with the anomaly condition set based on the welding location of the new radiation data, and determines whether the laser welding process in which the corresponding new radiation data is generated is normal or defective.

In this way, in other words, in the quality determining step S300, the anomaly score, which is the analysis result of the corresponding new radiation data, is compared based on the threshold setting updated by the threshold updating step S80 or the initial threshold based on the welding location of the new radiation data, and when the anomaly score exceeds the reference, it is determined that a defect has occurred in the laser welding process that generates the corresponding new radiation data.

The method of checking quality of laser welding according to an embodiment of the present disclosure not only determines whether the laser welding process is normal or defective, but also, according to the determination result by the quality determining step S300, when the laser welding process that generates the corresponding new radiation data is determined to be normal, adds the corresponding new radiation data to the training data set to update the training model.

Of course, the process performs additional learning by utilizing factory downtime when the laser welding process is not in progress. That is, the operation of clustering step S22 is repeatedly performed using the corresponding new radiation data.

In addition, as the determination result of the quality determining step S300, when the laser welding process that generates the corresponding new radiation data is determined to be defective, the threshold optimization is repeatedly performed using the corresponding new radiation data. That is, the operation of the defective anomaly deriving step S50 is repeatedly performed using the corresponding new radiation data.

In this case, in consideration of the performance of the arithmetic processing means available in the mass production application process, the time available for learning, the amount of available memory, etc., the operation is repeatedly performed while deleting the past radiation data. As for the deletion condition, it is preferable to delete the radiation data that is input most recently.

The present disclosure described above can be embodied as a computer readable code on a medium in which a program is recorded. A computer readable medium may include all kinds of recording devices in which data that may be read by a computer system are stored. An example of the computer readable medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disk, an optical data storage, and the like, and also include a medium implemented in a form of a carrier wave (for example, transmission through the Internet). In addition, the computer may include the system for checking quality of laser welding of the present disclosure.

According to the system and method for checking quality of laser welding according to the present disclosure as described above, it is possible to apply a consistent defect determination criterion by determining laser welding quality using an anomaly score predicted based on machine learning.

Compared to variables (upper limit and lower limit height, invasion frequency, invasion area, etc., based on a reference sensing value) that have been applied as conventional defect determination criteria, comparison variables may be reduced to one dimension called an anomaly score, so there is the advantage that a worker does not have to continuously adjust the quality determination criterion.

As a result, it is possible to facilitate maintenance and management of laser welding quality and reduce quality costs.

In addition, by extracting and deleting a process environment trend during a data preprocessing process, it is possible to minimize the influence on the process environment trends.

It is possible to not only delete process environment trends, but also continuously monitor the deleted process environment trends and use the process environment trends to improve the process environment.
Although preferred embodiments of the present disclosure have been described above, the embodiments disclosed in the present disclosure are only for explaining, not limiting, the technical scope of the present invention, which should be defined by the appended claims.

## Claims

1. A system for checking quality of laser welding, comprising:
a data input unit (100) configured to receive new radiation data generated during a laser welding process, wherein the new radiation data is a plasma sensing value generated by converting a plasma radiated from a welded portion in a welding process into an optical signal;
an input data preprocessing unit (200) configured to preprocess the new radiation data received by the data input unit (100); and
a quality determination unit (300) configured to:
input the new radiation data preprocessed by the input data preprocessing unit (200) to a training model that has been learned and stored in advance,
receive an anomaly score assigned to determine a degree of deviation of the new radiation data compared to a normal data distribution trained by the training model,
compare the anomaly score output based on a welding location of the corresponding new radiation data based on preset threshold conditions for each welding location, and
determine whether the laser welding process in which the corresponding new radiation data is generated is normal or defective,
**characterized in that**:
the system further comprises, to store the training model in advance:
a data collection unit (10) configured to collect radiation data generated during the laser welding process received in advance;
a collected data preprocessing unit (20) configured to perform the preprocessing on the radiation data collected by the data collection unit (10); and
a learning processing unit (30) configured to perform learning processing by inputting the radiation data preprocessed by the collected data preprocessing unit (20) to a pre-stored machine learning network,
wherein, in the quality determination unit (300), the training model by the learning processing unit (30) is stored, and
wherein the collected data preprocessing unit (20) includes:
a normal extraction unit (21) configured to extract normal radiation data, which is radiation data by a welding process determined to be normal, from among the radiation data by the data collection unit (10);
a clustering unit (22) configured to perform clustering of the normal radiation data by the normal extraction unit (21) using a pre-stored algorithm;
a cluster optimization unit (23) configured to evaluate clustering by the clustering unit (22) using the pre-stored algorithm and select the most optimal number of clusters;
a centroid setting unit (24) configured to classify the normal radiation data extracted by the normal extraction unit (21) based on the most optimal number of clusters selected by the cluster optimization unit (23) and set centroids of each cluster; and
a learning normalization unit (25) configured to analyze the normal radiation data included in each cluster and delete the normal radiation data corresponding to the centroid to perform data normalization.

2. The system of claim 1, further comprising,
to set outlier conditions for each welding location in advance:
a defect extraction unit (40) configured to extract defective radiation data, which is radiation data by a welding process determined to be defective, from among the radiation data by the data collection unit (10);
a defective anomaly derivation unit (50) configured to: analyze the defective radiation data extracted by the defect extraction unit (40),
classify the defective radiation data for each welding location information based on welding location information included in each defective radiation data,
input the defective radiation data for each welding location information to the training model by the learning processing unit (30), and
derive the anomaly scores for each welding location information; and
a threshold setting unit (60) configured to use the anomaly scores for each welding location information derived by the defective anomaly derivation unit (50) to set a threshold condition for determining whether the laser welding process is normal or defective.

3. The system of claim 2, wherein the threshold setting unit (60) includes:
an anomaly determination unit (61) configured to determine whether the anomaly score derived by the defective anomaly derivation unit (50) satisfies a preset over-detection rate setting condition, the preset over-detection rate setting condition being a rate of determining normal as detective;
a threshold determination unit (62) configured to, based on the determination result of the anomaly determination unit (61) and when the anomaly score derived by the defective anomaly derivation unit (50) satisfies the preset over-detection rate setting condition, determine whether a predetermined condition is satisfied based on preset thresholds for each welding location information; and
a threshold update unit (63) configured to, based on a determination result of the threshold determination unit (62) and when the predetermined condition is satisfied, update threshold setting to the corresponding anomaly score,
wherein the threshold setting unit (60) is configured to operate on all the defective radiation data extracted by the defect extraction unit (40) and set thresholds for each welding location information.

4. The system of claim 3, wherein the quality determination unit (300) is configured to compare the anomaly score, which is an analysis result, based on the threshold setting updated by the threshold determination unit (62) or an initial threshold, and determine that a defect has occurred in the corresponding laser welding process when the anomaly score exceeds a reference.

5. The system of any one of claims 1 to 4, wherein the input data preprocessing unit (200) includes:
a similarity processing unit (210) configured to calculate a vector similarity between the centroids of each cluster set by the centroid setting unit (24) and the new radiation data, and search for a centroid having a highest similarity;
a case addition unit (220) configured to add the new radiation data to a cluster having the centroid having the highest similarity searched by the similarity processing unit (210);
a centroid resetting unit (230) configured to reset and update the centroid of the cluster to which the new radiation data is added by the case addition unit (220); and
an input normalization unit (240) configured to analyze the radiation data included in each cluster and delete data corresponding to the centroid to perform the normalization of the new radiation data.

6. The system of claim 5, wherein, when a number of radiation data included in the cluster having the centroid having the highest similarity by the similarity processing unit (210) exceeds a preset maximum value, the case addition unit (220) is configured to delete first received radiation data and add the corresponding new radiation data.

7. A method of checking quality of laser welding using a system for checking quality of laser welding in which each step is performed by arithmetic processing means, the method comprising:
in an inference process, a data inputting step (S100) including receiving, by a data input unit, new radiation data generated during a laser welding process, wherein the new radiation data is a plasma sensing value generated by converting a plasma radiated from a welded portion in a welding process into an optical signal;
an input data preprocessing step (S200) including preprocessing, by an input data preprocessing unit, the new radiation data received by the data input unit; and
a quality determining step (S300) including inputting, by a quality determination unit, the new radiation data preprocessed by the input data preprocessing unit to a training model that has been learned and stored in advance, receiving an anomaly score assigned to determine a degree of deviation of the new radiation data compared to a normal data distribution trained by the training model, comparing the anomaly score output based on a welding location of the corresponding new radiation data based on preset threshold conditions for each welding location, and determining whether the laser welding process in which the corresponding new radiation data is generated is normal or defective,
**characterized in that**:
the method further comprises a learning process to store the training model in advance including:
a data collecting step (S10) including collecting, by a data collection unit, radiation data generated during the laser welding process received in advance;
a collected data preprocessing step (S20) including performing, by a collected data preprocessing unit, preprocessing the radiation data collected by the data collection unit; and
a learning processing step (S30) including performing, by a learning processing unit, learning processing by inputting the radiation data preprocessed by the collected data preprocessing unit to a pre-stored machine learning network are further performed, and
wherein the collected data preprocessing step (S20) includes:
a normal extracting step (S21) including extracting, by a normal extraction unit, normal radiation data, which is radiation data by a welding process determined to be normal, from among the radiation data by the data collection unit;
a clustering step (S22) including performing, by a clustering unit, clustering of the normal radiation data by the normal extraction unit using a pre-stored algorithm;
a cluster optimization step (S23) including evaluating, by a cluster optimization unit, the clustering by the clustering unit using the pre-stored algorithm and selecting the most optimal number of clusters;
a centroid setting step (S24) including classifying, by a centroid setting unit, the normal radiation data extracted by the normal extraction unit based on the most optimal number of clusters selected by the cluster optimization unit, and setting a centroid of each cluster; and
a learning normalization step (S25) including analyzing, by a learning normalization unit, the normal radiation data included in each cluster and deleting the normal radiation data corresponding to the centroid to perform data normalization.

8. The method of claim 7, wherein, to set the anomaly conditions for each welding location in advance, in the learning process,
a defect extracting step (S40) including extracting, by a defect extraction unit, defective radiation data, which is radiation data by a welding process determined to be defective, from among the radiation data by the data collection unit;
a defective anomaly deriving step (S50) including analyzing, by a defective anomaly derivation unit, the defective radiation data extracted by the defect extraction unit, classifying the defective radiation data for each welding location information based on welding location information included in each defective radiation data, inputting the defective radiation data for each welding location information to the training model in the learning processing step S30), and deriving the anomaly scores for each welding location information; and
an anomaly determining step (S60) including determining, by an anomaly determination unit, whether the anomaly score derived by the defective anomaly derivation unit satisfies a preset over-detection rate setting condition, the preset over-detection rate setting condition being a rate of determining normal as detective;
based on the determination result of the anomaly determining step (S60), and in response to the anomaly score derived by the defective anomaly derivation unit satisfies the preset over-detection rate setting condition, a threshold determining step (S70) including determining, by a threshold determination unit, whether a predetermined condition is satisfied based on preset thresholds for each welding location information threshold; and
based on a determination result of the threshold determining step (S70), in response to the predetermined condition being satisfied, a threshold updating step (S80) including updating, by a threshold update unit, threshold setting to the corresponding anomaly score are further performed.

9. The method of claim 8, wherein the quality determining step (S300) includes comparing, by the quality determination unit, the anomaly score, which is an analysis result, based on the threshold setting updated by the threshold update unit or an initial threshold, and determining that a defect has occurred in the corresponding laser welding process in response to the anomaly score exceeding a reference.

10. The method any one of claims 7 to 9, wherein the input data preprocessing step includes:
a similarity processing step (S210) including calculating, by a similarity processing unit, a vector similarity between the centroids of each cluster set by the centroid setting unit and the new radiation data, and searching for a centroid having a highest similarity;
a case adding step (S220) including adding, by a case addition unit, the new radiation data to a cluster having the centroid having the highest similarity searched by the similarity processing unit;
a centroid resetting step (S230) of resetting and updating, both by a centroid resetting unit, the centroid of the cluster to which the new radiation data is added by the case addition unit; and
an input normalization step (S240) including analyzing, by an input normalization unit, the radiation data included in each cluster and deleting data corresponding to the centroid to perform the normalization of the new radiation data.

11. The method of claim 10, wherein, in response to a number of radiation data included in the cluster having the centroid having the highest similarity by the similarity processing unit exceeding a preset maximum value, the case adding step (S220) includes deleting, by the case addition unit, first received radiation data is deleted and adding the corresponding new radiation data.

## Patentansprüche

1. System zur Prüfung der Qualität von Laserschweißen, umfassend:
eine Dateneingangseinheit (100), die dazu eingerichtet ist, neue Strahlungsdaten zu empfangen, die während eines Laserschweißprozesses erzeugt werden, wobei die neuen Strahlungsdaten ein Plasmaabtastwert sind, der durch eine Umwandlung eines von einem geschweißten Abschnitt in einem Schweißprozess abgestrahlten Plasmas in ein optisches Signal erzeugt wird;
eine Eingangsdaten-Vorverarbeitungseinheit (200), die dazu eingerichtet ist, die von der Dateneingangseinheit (100) empfangenen neuen Strahlungsdaten vorzuverarbeiten; und
eine Qualitätsbestimmungseinheit (300), die eingerichtet ist zum:
Eingeben der von der Eingangsdaten-Vorverarbeitungseinheit (200) vorverarbeiteten neuen Strahlungsdaten in ein zuvor erlerntes und gespeichertes Trainingsmodell,
Empfangen eines Anomaliewerts, der zur Bestimmung eines Abweichungsgrads der neuen Strahlungsdaten im Vergleich zu einer durch das Trainingsmodell trainierten normalen Datenverteilung zugewiesen wird,
Vergleichen des basierend auf einer Schweißstelle ausgegebenen Anomaliewerts der entsprechenden neuen Strahlungsdaten basierend auf voreingestellten Schwellenwertbedingungen für jede Schweißstelle und
Bestimmen, ob der Laserschweißprozess, in dem die entsprechenden neuen Strahlungsdaten erzeugt werden, normal oder fehlerhaft ist,
**dadurch gekennzeichnet, dass**:
das System zum Speichern des Trainingsmodells im Voraus weiterhin umfasst:
eine Datenerfassungseinheit (10), die dazu eingerichtet ist, im Voraus empfangene Strahlungsdaten, die während des Laserschweißprozesses erzeugt werden, zu erfassen;
eine Vorverarbeitungseinheit (20) für erfasste Daten, die dazu eingerichtet ist, die Vorverarbeitung der von der Datenerfassungseinheit (10) erfassten Strahlungsdaten durchzuführen; und
eine Lernverarbeitungseinheit (30), die dazu eingerichtet ist, eine Lernverarbeitung durchzuführen, indem die von der Vorverarbeitungseinheit für erfasste Daten (20) vorverarbeiteten Strahlungsdaten in ein vorgespeichertes maschinelles Lernnetzwerk eingegeben werden,
wobei in der Qualitätsbestimmungseinheit (300) das Trainingsmodell der Lernverarbeitungseinheit (30) gespeichert ist und
wobei die Einheit (20) zur Vorverarbeitung der erfassten Daten Folgendes umfasst:
eine Normalextraktionseinheit (21), die dazu eingerichtet ist, normale Strahlungsdaten, die Strahlungsdaten von einem als normal bestimmten Schweißprozess sind, aus den Strahlungsdaten der Datenerfassungseinheit (10) zu extrahieren;
eine Clustereinheit (22), die dazu eingerichtet ist, ein Clustering der normalen Strahlungsdaten durch die Normalextraktionseinheit (21) unter Verwendung eines vorgespeicherten Algorithmus durchzuführen;
eine Clusteroptimierungseinheit (23), die dazu eingerichtet ist, ein Clustering durch die Clustereinheit (22) unter Verwendung des vorgespeicherten Algorithmus auszuwerten und die optimale Anzahl von Clustern auszuwählen;
eine Zentroidfestlegungseinheit (24), die dazu eingerichtet ist, die von der Normalextraktionseinheit (21) extrahierten Normalstrahlungsdaten basierend auf der optimalen Anzahl von Clustern, die von der Clusteroptimierungseinheit (23) ausgewählt wurden, zu klassifizieren und Zentroide jedes Clusters festzulegen; und
eine Lernnormalisierungseinheit (25), die dazu eingerichtet ist, die in jedem Cluster enthaltenen Normalstrahlungsdaten zu analysieren und die dem Zentroid entsprechenden Normalstrahlungsdaten zu löschen, um eine Datennormalisierung durchzuführen.

2. System nach Anspruch 1, weiterhin umfassend,
zum Festlegen von Ausreißerbedingungen für jede Schweißstelle im Voraus:
eine Fehlerextraktionseinheit (40), die dazu eingerichtet ist, fehlerhafte Strahlungsdaten, die Strahlungsdaten von einem als fehlerhaft bestimmten Schweißprozess sind, aus den Strahlungsdaten der Datenerfassungseinheit (10) zu extrahieren;
eine Fehleranomalieableitungseinheit (50), die eingerichtet ist zum:
Analysieren der von der Fehlerextraktionseinheit (40) extrahierten fehlerhaften Strahlungsdaten,
Klassifizieren der fehlerhaften Strahlungsdaten für jede Schweißstelleninformation basierend auf Schweißstelleninformationen, die in den einzelnen fehlerhaften Strahlungsdaten enthalten sind,
Eingeben der fehlerhaften Strahlungsdaten für jede Schweißstelleninformation in das Trainingsmodell durch die Lernverarbeitungseinheit (30) und
Ableiten der Anomaliewerte für jede Schweißstelleninformation; und
eine Schwellenwertfestlegungseinheit (60), die dazu eingerichtet ist, die Anomaliewerte für jede Schweißstelleninformation, die von der Fehleranomalieableitungseinheit (50) abgeleitet wurde, zu verwenden, um eine Schwellenwertbedingung zum Bestimmen, ob der Laserschweißprozess normal oder fehlerhaft ist, festzulegen.

3. System nach Anspruch 2, wobei die Schwellenwertfestlegungseinheit (60) umfasst:
eine Anomaliebestimmungseinheit (61), die dazu eingerichtet ist, zu bestimmen, ob der von der Fehleranomalieableitungseinheit (50) abgeleitete Anomaliewert eine voreingestellte Bedingung zur Einstellung einer Übererkennungsrate erfüllt, wobei die voreingestellte Bedingung zur Einstellung der Übererkennungsrate eine Rate ist, mit der normal als fehlerhaft bestimmt wird;
eine Schwellenwertbestimmungseinheit (62), die dazu eingerichtet ist, basierend auf dem Bestimmungsergebnis der Anomaliebestimmungseinheit (61) und wenn der von der Fehleranomalieableitungseinheit (50) abgeleitete Anomaliewert die voreingestellte Bedingung zur Einstellung der Übererkennungsrate erfüllt, zu bestimmen, ob eine vorgegebene Bedingung basierend auf voreingestellten Schwellenwerten für jede Schweißstelleninformation erfüllt ist; und
eine Schwellenwertaktualisierungseinheit (63), die dazu eingerichtet ist, basierend auf einem Bestimmungsergebnis der Schwellenwertbestimmungseinheit (62) und wenn die vorgegebene Bedingung erfüllt ist, die Schwellenwertfestlegung auf den entsprechenden Anomaliewert zu aktualisieren,
wobei die Schwellenwertfestlegungseinheit (60) dazu eingerichtet ist, auf allen von der Fehlerextraktionseinheit (40) extrahierten fehlerhaften Strahlungsdaten betrieben zu werden und Schwellenwerte für jede Schweißstelleninformation festzulegen.

4. System nach Anspruch 3, wobei die Qualitätsbestimmungseinheit (300) dazu eingerichtet ist, den Anomaliewert, der ein Analyseergebnis ist, basierend auf der von der Schwellenwertbestimmungseinheit (62) aktualisierten Schwellenwertfestlegung oder einem anfänglichen Schwellenwert zu vergleichen und zu bestimmen, dass im entsprechenden Laserschweißprozess ein Fehler aufgetreten ist, wenn der Anomaliewert einen Referenzwert überschreitet.

5. System nach einem der Ansprüche 1 bis 4, wobei die Eingangsdaten-Vorverarbeitungseinheit (200) umfasst:
eine Ähnlichkeitsverarbeitungseinheit (210), die dazu eingerichtet ist, eine Vektorähnlichkeit zwischen den Zentroiden jedes Clusters, die durch die Zentroidfestlegungseinheit (24) festgelegt wurden, und den neuen Strahlungsdaten zu berechnen und nach einem Zentroid mit einer höchsten Ähnlichkeit zu suchen;
eine Fallzufügungseinheit (220), die dazu eingerichtet ist, die neuen Strahlungsdaten zu einem Cluster hinzuzufügen, der das Zentroid mit der höchsten Ähnlichkeit aufweist, das von der Ähnlichkeitsverarbeitungseinheit (210) gesucht wurde;
eine Zentroidrücksetzeinheit (230), die dazu eingerichtet ist, das Zentroid des Clusters, zu dem die neuen Strahlungsdaten durch die Fallzufügungseinheit (220) hinzugefügt werden, zurückzusetzen und zu aktualisieren; und
eine Eingangsnormalisierungseinheit (240), die dazu eingerichtet ist, die in jedem Cluster enthaltenen Strahlungsdaten zu analysieren und dem Zentroid entsprechende Daten zu löschen, um die Normalisierung der neuen Strahlungsdaten durchzuführen.

6. System nach Anspruch 5, wobei die Fallzufügungseinheit (220) dazu eingerichtet ist, zuerst empfangene Strahlungsdaten zu löschen und die entsprechenden neuen Strahlungsdaten hinzuzufügen, wenn die Anzahl von Strahlungsdaten, die in dem Cluster mit dem Zentroid mit der höchsten Ähnlichkeit durch die Ähnlichkeitsverarbeitungseinheit (210) enthalten sind, einen voreingestellten Maximalwert überschreitet.

7. Verfahren zum Prüfen der Qualität von Laserschweißen unter Verwendung eines Systems zum Prüfen der Qualität von Laserschweißen, in dem jeder Schritt durch arithmetische Verarbeitungsmittel durchgeführt wird, wobei das Verfahren umfasst:
in einem Inferenzprozess, einen Dateneingangsschritt (S100), der Empfangen neuer Strahlungsdaten, die während eines Laserschweißprozesses erzeugt werden, durch eine Dateneingangseinheit umfasst, wobei die neuen Strahlungsdaten ein Plasmaabtastwert sind, der durch Umwandeln eines von einem geschweißten Abschnitt in einem Schweißprozess abgestrahlten Plasmas in ein optisches Signal erzeugt wird;
einen Eingangsdaten-Vorverarbeitungsschritt (S200), der Vorverarbeiten der von der Dateneingangseinheit empfangenen neuen Strahlungsdaten durch eine Eingangsdaten-Vorverarbeitungseinheit umfasst; und
einen Qualitätsbestimmungsschritt (S300), der Eingeben der von der Eingangsdaten-Vorverarbeitungseinheit vorverarbeiteten neuen Strahlungsdaten in ein vorab erlerntes und gespeichertes Trainingsmodell durch eine Qualitätsbestimmungseinheit, Empfangen eines zugeordneten Anomaliewerts zur Bestimmung eines Abweichungsgrads der neuen Strahlungsdaten im Vergleich zu einer durch das Trainingsmodell trainierten normalen Datenverteilung, Vergleichen des ausgegebenen Anomaliewerts basierend auf einer Schweißstelle der entsprechenden neuen Strahlungsdaten basierend auf voreingestellten Schwellenwertbedingungen für jede Schweißstelle und Bestimmen, ob der Laserschweißprozess, in dem die entsprechenden neuen Strahlungsdaten erzeugt werden, normal oder fehlerhaft ist,
**dadurch gekennzeichnet, dass**:
das Verfahren weiterhin einen Lernprozess zum Speichern des Trainingsmodells im Voraus umfasst, der Folgendes umfasst:
einen Datenerfassungsschritt (S10), der Erfassen von während des Laserschweißprozesses erzeugten und im Voraus empfangenen Strahlungsdaten durch eine Datenerfassungseinheit umfasst;
einen Schritt zur Vorverarbeitung der erfassten Daten (S20), der Vorverarbeiten der von der Datenerfassungseinheit erfassten Strahlungsdaten durch eine Vorverarbeitungseinheit für erfasste Daten umfasst; und
ein Lernverarbeitungsschritt (S30), der Durchführen einer Lernverarbeitung durch eine Lernverarbeitungseinheit durch Eingabe der von der Vorverarbeitungseinheit für erfasste Daten vorverarbeiteten Strahlungsdaten in ein vorgespeichertes maschinelles Lernnetzwerk umfasst,
wobei der Schritt zur Vorverarbeitung der erfassten Daten (S20) umfasst:
einen Normalextraktionsschritt (S21), der Extrahieren von Normalstrahlungsdaten, die Strahlungsdaten von einem als normal bestimmten Schweißprozess sind, aus den Strahlungsdaten von der Datenerfassungseinheit durch eine Normalextraktionseinheit umfasst;
einen Clustering-Schritt (S22), der Durchführen von Clustering der normalen Strahlungsdaten durch die Normalextraktionseinheit unter Verwendung eines vorgespeicherten Algorithmus durch eine Clustering-Einheit umfasst;
einen Clusteroptimierungsschritt (S23), der Auswerten des Clustering durch die Clustering-Einheit unter Verwendung des vorgespeicherten Algorithmus durch eine Clusteroptimierungseinheit und Auswählen der optimalen Anzahl von Clustern umfasst;
einen Zentroidfestlegungsschritt (S24), der Klassifizieren der von der Normalextraktionseinheit extrahierten Normalstrahlungsdaten durch eine Zentroidfestlegungseinheit basierend auf der optimalen Anzahl von Clustern, die von der Clusteroptimierungseinheit ausgewählt wurden, und Festlegen eines Zentroids jedes Clusters umfasst; und
einen Lernnormalisierungsschritt (S25), der Analysieren der in jedem Cluster enthaltenen Normalstrahlungsdaten durch eine Lernnormalisierungseinheit und Löschen der dem Zentroid entsprechenden Normalstrahlungsdaten umfasst, um eine Datennormalisierung durchzuführen.

8. Verfahren nach Anspruch 7, wobei, zum Festlegen der Anomaliebedingungen für jede Schweißstelle im Voraus, im Lernprozess,
ein Fehlerextraktionsschritt (S40), der Extrahieren fehlerhafter Strahlungsdaten, die Strahlungsdaten eines als fehlerhaft bestimmten Schweißprozesses sind, aus den Strahlungsdaten der Datenerfassungseinheit durch eine Fehlerextraktionseinheit umfasst;
ein Schritt zum Ableiten fehlerhafter Anomalien (S50), der Analysieren der von der Fehlerextraktionseinheit extrahierten fehlerhaften Strahlungsdaten durch eine Einheit zum Ableiten fehlerhafter Anomalien, Klassifizieren der fehlerhaften Strahlungsdaten für jede Schweißstelleninformation basierend auf den in den fehlerhaften Strahlungsdaten jeweils enthaltenen Schweißstelleninformationen, Eingeben der fehlerhaften Strahlungsdaten für jede Schweißstelleninformation in das Trainingsmodell im Lernverarbeitungsschritt (S30) und Ableiten der Anomaliewerte für jede Schweißstelleninformation umfasst; und
ein Anomaliebestimmungsschritt (S60), der Bestimmen durch eine Anomaliebestimmungseinheit umfasst, ob der von der Fehleranomalieableitungseinheit abgeleitete Anomaliewert eine voreingestellte Bedingung zur Einstellung einer Übererkennungsrate erfüllt, wobei die voreingestellte Bedingung zur Einstellung der Übererkennungsrate eine Rate ist, mit der normal als fehlerhaft bestimmt wird;
basierend auf dem Bestimmungsergebnis des Anomaliebestimmungsschritts (S60) und als Reaktion darauf, dass der von der Fehleranomalieableitungseinheit abgeleitete Anomaliewert die voreingestellte Bedingung zur Einstellung der Übererkennungsrate erfüllt, ein Schwellenwertbestimmungsschritt (S70), der Bestimmen durch eine Schwellenwertbestimmungseinheit umfasst, ob eine vorgegebene Bedingung basierend auf voreingestellten Schwellenwerten für jeden Schweißstelleninformationsschwellenwert erfüllt ist; und
basierend auf einem Bestimmungsergebnis des Schwellenwertbestimmungsschritts (S70) als Reaktion darauf, dass die vorgegebene Bedingung erfüllt ist, ein Schwellenwertaktualisierungsschritt (S80), der Aktualisieren der Schwellenwertfestlegung auf den entsprechenden Anomaliewert durch eine Schwellenwertaktualisierungseinheit umfasst, weiterhin durchgeführt werden.

9. Verfahren nach Anspruch 8, wobei der Qualitätsbestimmungsschritt (S300) Vergleichen des Anomaliewerts, der ein Analyseergebnis ist, durch die Qualitätsbestimmungseinheit basierend auf der durch die Schwellenwertaktualisierungseinheit aktualisierten Schwellenwertfestlegung oder einem anfänglichen Schwellenwert und Bestimmen, dass in dem entsprechenden Laserschweißprozess ein Fehler aufgetreten ist, als Reaktion darauf, dass der Anomaliewert einen Referenzwert überschreitet, umfasst.

10. Verfahren nach einem der Ansprüche 7 bis 9, wobei der Schritt der Vorverarbeitung der Eingangsdaten umfasst:
einen Ähnlichkeitsverarbeitungsschritt (S210), der Berechnen einer Vektorähnlichkeit zwischen den Zentroiden jedes Clusters, die durch die Zentroidfestlegungseinheit festgelegt wurden, und den neuen Strahlungsdaten durch eine Ähnlichkeitsverarbeitungseinheit und Suchen nach einem Zentroid mit einer höchsten Ähnlichkeit umfasst;
einen Fallhinzufügungsschritt (S220), der Hinzufügen der neuen Strahlungsdaten zu einem Cluster mit dem Zentroid mit der höchsten Ähnlichkeit, das von der Ähnlichkeitsverarbeitungseinheit gesucht wurde, durch eine Fallhinzufügungseinheit umfasst;
einen Zentroidrücksetzschritt (S230) zum Zurücksetzen und Aktualisieren des Zentroids des Clusters, zu dem die neuen Strahlungsdaten durch die Fallzufügungseinheit hinzugefügt werden, durch eine Zentroidrücksetzeinheit; und
einen Eingangsnormalisierungsschritt (S240), der Analysieren der in jedem Cluster enthaltenen Strahlungsdaten durch eine Eingangsnormalisierungseinheit und Löschen von dem Zentroid entsprechenden Daten umfasst, um die Normalisierung der neuen Strahlungsdaten durchzuführen.

11. Verfahren nach Anspruch 10, wobei als Reaktion darauf, dass eine Anzahl von in dem Cluster mit dem Zentroid mit der höchsten Ähnlichkeit enthaltenen Strahlungsdaten durch die Ähnlichkeitsverarbeitungseinheit einen voreingestellten Maximalwert überschreitet, der Fallhinzufügungsschritt (S220) Löschen der zuerst empfangenen Strahlungsdaten und Hinzufügen der entsprechenden neuen Strahlungsdaten durch die Fallhinzufügungseinheit umfasst.

## Revendications

1. Système de contrôle de la qualité d'une soudure laser, comprenant:
une unité d'entrée de données (100) conçue pour recevoir de nouvelles données de rayonnement générées au cours d'un processus de soudage au laser, les nouvelles données de rayonnement étant une valeur de détection du plasma générée par la conversion d'un plasma émis par une partie soudée au cours d'un processus de soudage en un signal optique;
une unité de prétraitement des données d'entrée (200) conçue pour prétraiter les nouvelles données de rayonnement reçues par l'unité d'entrée de données (100); et
une unité de détermination de qualité (300) conçue pour:
entrer les nouvelles données de rayonnement prétraitées par l'unité de prétraitement des données d'entrée (200) dans un modèle d'apprentissage qui a été appris et stocké à l'avance,
recevoir un score d'anomalie attribué pour déterminer le degré d'écart des nouvelles données de rayonnement par rapport à une distribution de données normales entraînée par le modèle d'entraînement,
comparer le score d'anomalie délivré en fonction d'un emplacement de soudure des nouvelles données de rayonnement correspondantes sur la base de conditions de seuil prédéfinies pour chaque emplacement de soudure, et
déterminer si le processus de soudage au laser au cours duquel les nouvelles données de rayonnement correspondantes sont générées est normal ou défectueux,
**caractérisé en ce que**:
le système comprend en outre le stockage préalable du modèle d'entraînement:
une unité de collecte de données (10) conçue pour collecter les données de rayonnement générées pendant le processus de soudage au laser reçu à l'avance;
une unité de prétraitement des données collectées (20) conçue pour prétraiter les données de rayonnement collectées par l'unité de collecte de données (10); et
une unité de traitement d'apprentissage (30) conçue pour effectuer un traitement d'apprentissage en entrant les données de rayonnement prétraitées par l'unité de prétraitement des données collectées (20) dans un réseau d'apprentissage automatique préenregistré,
dans lequel, dans l'unité de détermination de qualité (300) est stocké le modèle d'entraînement par l'unité de traitement 'apprentissage (30), et
dans lequel l'unité de prétraitement des données collectées (20) comprend:
une unité d'extraction normale (21) conçue pour extraire les données de rayonnement normales, qui sont les données de rayonnement, par un processus de soudage considéré comme normal, parmi les données de rayonnement par l'unité de collecte de données (10);
une unité de regroupement (22) conçue pour regrouper les données de rayonnement normal par l'unité d'extraction normale (21) à l'aide d'un algorithme préenregistré;
une unité d'optimisation de groupe (23) conçue pour évaluer le regroupement par l'unité de regroupement (22) à l'aide de l'algorithme préenregistré et sélectionner le nombre optimal de groupes;
une unité de réglage de centroïde (24) conçue pour classer les données de rayonnement normal extraites par l'unité d'extraction normale (21) sur la base du nombre optimal de groupes sélectionnés par l'unité d'optimisation de groupes (23) et pour régler les centroïdes de chaque groupe; et
une unité de normalisation d'apprentissage (25) conçue pour analyser les données de rayonnement normal incluses dans chaque groupe et supprimer les données de rayonnement normal correspondant au centroïde afin de procéder à la normalisation des données.

2. Système selon la revendication 1, comprenant en outre,
pour définir les conditions particulières de chaque emplacement de soudure:
une unité d'extraction de défaut (40) conçue pour extraire les données de rayonnement défectueux, qui sont les données de rayonnement, par un processus de soudage considéré comme défectueux, parmi les données de rayonnement par l'unité de collecte de données (10);
une unité de calcul d'anomalie défectueuse (50) conçue pour:
analyser les données de rayonnement défectueux extraites par l'unité d'extraction de défaut (40),
classer les données de rayonnement défectueux pour chaque information d'emplacement de soudure sur la base des informations d'emplacement de soudure incluses dans chaque donnée de rayonnement défectueux,
entrer dans le modèle d'entraînement au moyen de l'unité de traitement d'apprentissage (30) les données de rayonnement défectueux pour chaque information d'emplacement de soudure, et
calculer les scores d'anomalie pour chaque information d'emplacement de soudure; et
une unité de réglage de seuil (60) conçue pour utiliser les scores d'anomalie pour chaque information d'emplacement de soudure calculée par l'unité de calcul d'anomalie défectueuse (50) afin de fixer une condition de seuil pour déterminer si le processus de soudage laser est normal ou défectueux.

3. Système selon la revendication 2, dans lequel l'unité de réglage de seuil (60) comprend:
une unité de détermination d'anomalie (61) conçue pour déterminer si le score d'anomalie calculé par l'unité de calcul d'anomalie défectueuse (50) remplit une condition de réglage du taux de surdétection prédéfini, la condition de réglage du taux de surdétection prédéfini étant un taux de détermination de la normalité en tant que détective;
une unité de détermination de seuil (62) conçue pour, sur la base du résultat de détermination de l'unité de détermination d'anomalie (61) et lorsque le score d'anomalie calculé par l'unité de dérivation d'anomalie de défaut (50) remplit la condition de réglage du taux de surdétection prédéfini, déterminer si une condition prédéterminée est remplie sur la base de seuils prédéfinis pour chaque information d'emplacement de soudure; et
une unité de mise à jour de seuil (63) conçue pour, sur la base d'un résultat de détermination de l'unité de détermination de seuil (62) et lorsque la condition prédéterminée est remplie, mettre à jour le réglage du seuil en fonction du score d'anomalie correspondant,
l'unité de définition de seuil (60) est conçue pour opérer sur toutes les données de rayonnement défectueux extraites par l'unité d'extraction de défaut (40) et définir des seuils pour chaque information d'emplacement de soudure.

4. Système selon la revendication 3, dans lequel l'unité de détermination de qualité (300) est conçue pour comparer le score d'anomalie, qui est un résultat d'analyse, sur la base du réglage de seuil mis à jour par l'unité de détermination de seuil (62) ou d'un seuil initial, et déterminer qu'un défaut s'est produit dans le processus de soudage laser correspondant lorsque le score d'anomalie dépasse une référence.

5. Système selon l'une quelconque des revendications 1 à 4, dans lequel l'unité de prétraitement des données d'entrée (200) comprend:
une unité de traitement de similarité (210) conçue pour calculer un vecteur de similarité entre les centroïdes de chaque groupe définis par l'unité de définition de centroïde (24) et les nouvelles données de rayonnement, et rechercher un centroïde présentant la plus grande similarité;
une unité d'ajout de cas (220) conçue pour ajouter les nouvelles données de rayonnement à un groupe dont le centroïde présente la plus grande similarité recherchée par l'unité de traitement de similarité (210) ;
une unité de réinitialisation du centroïde (230) conçue pour réinitialiser et mettre à jour le centroïde du groupe auquel les nouvelles données de rayonnement sont ajoutées par l'unité d'ajout de cas (220); et
une unité de normalisation d'entrée (240) conçue pour analyser les données de rayonnement incluses dans chaque groupe et supprimer les données correspondant au centroïde afin de procéder à la normalisation des nouvelles données de rayonnement.

6. Système selon la revendication 5, dans lequel lorsqu'un nombre de données de rayonnement incluses dans le groupe dont le centroïde présente la plus grande similarité selon l'unité de traitement de similarité (210) dépasse une valeur maximale prédéfinie, l'unité d'ajout de cas (220) est conçue pour supprimer les premières données de rayonnement reçues et ajouter les nouvelles données de rayonnement correspondantes.

7. Procédé de contrôle de qualité du soudage laser au moyen d'un système de contrôle de qualité du soudage au laser dans lequel chaque étape est effectuée par des moyens de traitement arithmétique, le procédé comprenant:
dans un processus d'inférence, une étape d'entrée de données (S100) consistant à recevoir, par une unité d'entrée de données, de nouvelles données de rayonnement générées au cours d'un processus de soudage au laser, les nouvelles données de rayonnement étant une valeur de détection du plasma générée par la conversion d'un plasma émis par une partie soudée au cours d'un processus de soudage en un signal optique;
une étape de prétraitement des données d'entrée (200) consistant à prétraiter, par une unité de prétraitement de données d'entrée, les nouvelles données de rayonnement reçues par l'unité d'entrée de données (100); et
une étape de détermination de qualité (S300) consistant à entrer, par une unité de détermination de qualité, les nouvelles données de rayonnement prétraitées par l'unité de prétraitement de données d'entrée dans un modèle d'entraînement qui a été appris et stocké à l'avance, à recevoir un score d'anomalie attribué pour déterminer un degré d'écart des nouvelles données de rayonnement par rapport à une distribution de données normale entraînées par le modèle d'entraînement, à comparer le score d'anomalie délivré en fonction d'un emplacement de soudure des nouvelles données de rayonnement correspondantes en fonction de conditions de seuil prédéfinies pour chaque emplacement de soudure, et à déterminer si le processus de soudage au laser dans lequel les nouvelles données de rayonnement correspondantes sont générées est normal ou défectueux,
**caractérisé en ce que**:
le système comprend en outre un processus d'apprentissage pour stocker au préalable le modèle d'entraînement y compris:
une étape de collecte de données (S10) consistant à collecter, par l'unité de collecte de données, les données de rayonnement générées pendant le processus de soudage laser reçues à l'avance;
une étape de prétraitement de données collectées (200) consistant à prétraiter, par une unité de prétraitement de données d'entrée, les données de rayonnement collectées par l'unité d'entrée de données (100); et
une étape de traitement d'apprentissage (S30) consistant à effectuer un traitement d'apprentissage en entrant les données de rayonnement prétraitées par l'unité de prétraitement des données collectées (20) dans un réseau d'apprentissage automatique préenregistré, et
dans lequel l'étape de prétraitement de données collectées (S20) comprend:
une étape d'extraction normale (S21) consistant à extraire, par une unité d'extraction normale, les données de rayonnement normal, qui sont les données de rayonnement, par un processus de soudage considéré comme normal, parmi les données de rayonnement par l'unité de collecte de données;
une étape de regroupement (S22) consistant à regrouper, par une unité de regroupement, les données de rayonnement normal par l'unité d'extraction normale (21) à l'aide d'un algorithme préenregistré;
une étape d'optimisation de groupe (S23) consistant à évaluer, par une unité d'optimisation de groupe, le regroupement par l'unité de regroupement à l'aide de l'algorithme préenregistré et à sélectionner le nombre optimal de groupes;
une étape de réglage de centroïde (S24) consistant à classer, par l'unité de réglage de centroïde, les données de rayonnement normal extraites par l'unité d'extraction normale sur la base du nombre optimal de groupes sélectionnés par l'unité d'optimisation de groupes et pour régler le centroïde de chaque groupe; et
une étape de normalisation d'apprentissage (25) consistant à analyser, par une unité de normalisation d'apprentissage, les données de rayonnement normal incluses dans chaque groupe et à supprimer les données de rayonnement normal correspondant au centroïde afin de procéder à la normalisation des données.

8. Procédé selon la revendication 7, dans lequel les étapes suivantes sont effectuées pour définir à l'avance les conditions d'anomalie pour chaque emplacement de soudure, dans le cadre du processus d'apprentissage,
une étape d'extraction normale (S40) consistant à extraire, par une unité d'extraction de défaut, les données de rayonnement défectueux, qui sont les données de rayonnement, par un processus de soudage considéré comme défectueux, parmi les données de rayonnement par l'unité de collecte de données;
une étape de calcul d'anomalie défectueuse (S50) consistant à analyser, par une unité de calcul d'anomalie défectueuse, les données de rayonnement défectueux extraites par l'unité d'extraction de défaut, à classer les données de rayonnement défectueux pour chaque information d'emplacement de soudure sur la base des informations d'emplacement de soudure incluses dans chaque donnée de rayonnement défectueux, à entrer les données de rayonnement défectueux pour chaque information d'emplacement de soudure dans le modèle d'apprentissage dans l'étape de traitement d'apprentissage S30), et à calculer les scores d'anomalie pour chaque information d'emplacement de soudure; et
une étape de détermination d'anomalie (S61) consistant à déterminer, par une unité de détermination d'anomalie, si le score d'anomalie calculé par l'unité de calcul d'anomalie défectueuse remplit une condition de réglage du taux de surdétection prédéfini, la condition de réglage du taux de surdétection prédéfini étant un taux de détermination de normalité comme étant un défaut;
sur la base du résultat de détermination de l'unité de détermination d'anomalie (60) et en réponse au score d'anomalie calculé par l'unité de calcul d'anomalie défectueuse qui remplit la condition de réglage du taux de surdétection prédéfini, une étape de détermination de seuil (S70) consistant à déterminer, par une unité de détermination de seuil, si une condition prédéterminée est remplie sur la base de seuils prédéfinis pour chaque seuil d'informations d'emplacement de soudure; et
sur la base d'un résultat de détermination de l'étape de détermination de seuil (S70), en réponse à la condition prédéterminée, une étape de mise à jour de seuil (S80) consistant à mettre à jour, par une unité de mise à jour de seuil, le réglage de seuil au score d'anomalie correspondant.

9. Système selon la revendication 8, dans lequel l'étape de détermination de qualité (S300) consiste à comparer, par l'unité de détermination de qualité, le score d'anomalie, qui est un résultat d'analyse, sur la base du réglage de seuil mis à jour par l'unité de détermination de seuil ou d'un seuil initial, et à déterminer qu'un défaut s'est produit dans le processus de soudage laser en réponse au score d'anomalie dépassant une référence.

10. Système selon l'une quelconque des revendications 7 à 9, dans lequel l'étape de prétraitement de données d'entrée comprend:
une étape de traitement de similarité (210) consistant à calculer, par une unité de traitement de similarité, un vecteur de similarité entre les centroïdes de chaque groupe définis par l'unité de définition de centroïde et les nouvelles données de rayonnement, et à rechercher un centroïde présentant la plus grande similarité;
une étape d'ajout de cas (220) consistant à ajouter, par une unité d'ajout de cas, les nouvelles données de rayonnement à un groupe dont le centroïde présente la plus grande similarité recherchée par l'unité de traitement de similarité;
une étape de réinitialisation du centroïde (S230) consistant à réinitialiser et à mettre à jour, à la fois par une unité de réinitialisation de centroïde, le centroïde du groupe auquel les nouvelles données de rayonnement sont ajoutées par l'unité d'ajout de cas; et
une étape de normalisation d'entrée (S240) consistant à analyser, par l'unité de normalisation d'entrée, les données de rayonnement incluses dans chaque groupe et à supprimer les données correspondant au centroïde afin de procéder à la normalisation des nouvelles données de rayonnement.

11. Système selon la revendication 10, dans lequel en réponse à un nombre de données de rayonnement incluses dans le groupe dont le centroïde présente la plus grande similarité selon l'unité de traitement de similarité dépasse une valeur maximale prédéfinie, l'étape d'ajout de cas (S220) consiste à supprimer, par l'unité d'ajout de cas, les premières données de rayonnement reçues et à ajouter les nouvelles données de rayonnement correspondantes.
